# EUROPÄISCHE PATENTSCHRIFT

(11) **EP 2 326 519 B1**
(45) Veröffentlichungstag und Bekanntmachung des Hinweises auf die Patenterteilung: **27.03.2013**
(21) Anmeldenummer: 09783159.8
(22) Anmeldetag: 18.09.2009
(51) Int. Cl.: B60B 39/10, B61C 15/10

(54) **SANDDOSIER- UND ABSPERREINRICHTUNG**
SAND DOSING AND BLOCKING DEVICE
DISPOSITIF DOSEUR DE SABLE ET D'ARRÊT

(30) Priorität: 22.09.2008 AT 14732008
(43) Veröffentlichungstag der Anmeldung: 01.06.2011
(73) Patentinhaber: Nowe GmbH, 31008 Elze (DE)
(72) Erfinder: BARTLING, Werner, 31008 Elze (DE)
(74) Vertreter: Sonn & Partner Patentanwälte
(86) Internationale Anmeldenummer: PCT/EP2009/062100
(87) Internationale Veröffentlichungsnummer: WO 2010/031831

(56) Entgegenhaltungen:
- US-A- 1 812 521
- US-A- 2 435 758
- US-A- 2 768 013
- US-A- 2 909 383
- US-A- 3 774 945

## Beschreibung

Die Erfindung betrifft eine Sanddosier- und Absperreinrichtung für Sandstreusysteme für Fahrzeuge, insbesondere angetriebene Schienenfahrzeuge, gemäß dem Oberbegriff von Anspruch 1.

Aus der US 2,435,758 A ist eine Sandstreuvorrichtung mit einer Hubstange bekannt, die mittels einer Magnetspule betätigt wird. Die Bewegung der Hubstange wird über einen Einsatz auf ein Ventil-Verschlusselement übertragen, das in einer Offenstellung eine Öffnung in einem Ventilring freigibt, so dass Sand vom Vorratsbehälter in Förderstutzen strömen kann. Zur Ansteuerung der Magnetspule ist eine Stromquelle in Verbindung mit einem Schalter vorgesehen, der zum Starten bzw. Anhalten des Betriebs der Sandstreuvorrichtung manuell betätigt wird. Zudem ist ein Wechselschalter vorgesehen, mit dem der Schalter intervallmäßig geöffnet und geschlossen wird.

Aus der gattungsgemässen US 2,768,013 A ist ein Ventilmechanismus für eine Sandstreuvorrichtung bekannt, der in einem Sandvorratsbehälter angeordnet ist. Durch Betätigung eines Schalters wird eine Magnetspule mit Strom versorgt, mit der eine im Inneren der Magnetspule aufgenommene Magnetstange verschiebbar ist. Am unteren Ende der Magnetstange sind Ventilelemente angeordnet, die in einer Offenstellung unter Wirkung der Schwerkraft den Durchtritt von Sand durch Öffnungen ermöglichen. Der Sand wird anschließend in eine Leitung und über Gabelungen zu den Rädern eines Fahrzeugs geführt.

Die US 2,909,383 A beschreibt eine Sandstreuvorrichtung in Form eines Plastikbeutels, der an eine Fahrzeugtür gehängt wird. Im Beutel ist eine Ventilvorrichtung angeordnet, die an einen Zigarettenanzünder im Fahrzeuginneren angeschlossen ist. Die Ventilvorrichtung weist einen mit einer elektromagnetischen Spule betätigbaren Kolben auf, mit dem ein Entnahmekanal verschließbar ist.

Aus der EP 1 312 488 A2 ist eine Absperreinrichtung für eine Sanddosiereinrichtung bekannt, bei welcher ein Dosierkolben an einem Hubmagneten angeschlossen ist. In einer Schließstellung eines Zulaufkanals der Dosiereinrichtung liegt eine ringförmige Auskragung einer mit dem Dosierkolben verbundenen Dichtung auf einem Vorsprung einer Gehäusewand auf. Um den Zulaufkanal freizugeben, wird die Auskragung mit Hilfe des Dosierkolbens vom Vorsprung abgehoben.

Die US 2,325,441 A beschreibt einen Sandstreuer mit einem Reservoir für Sand, an dessen unteres Ende eine Öffnung anschließt, welche mit einer schalenförmigen Ventilkappe verschließbar ist. Hiefür ist die Ventilkappe mit einem Kolben eines Hubmagneten verbunden.

Die JP 2000-071979 A zeigt eine Streuvorrichtung mit einem Vorratsbehälter und einem Zulaufkanal. In seiner Schließstellung wird der Zulaufkanal von einem Verschlusskolben abgeschlossen, welcher an einem Kolben eines elektrisch betätigbaren Hubmagneten befestigt ist.

In CH 423860 A ist eine weitere Sandstreuvorrichtung für Fahrzeuge beschrieben, bei welcher ein Streukanal mit einem elastisch verformbaren Schlauch verschließbar ist. Zum Ausstreuen von Sand werden Spulen erregt, so dass ein am Schlauch befestigter Schieber bzw. Tauchanker entgegen der Wirkung von Druckfedern nach außen gezogen wird, wodurch der Kanal freigegeben wird.

Aus der US 1,990,253 A und DE 418 221 C sind Sandstreuvorrichtungen mit mechanischen Schwingvorrichtungen bekannt.

Sandstreusysteme werden insbesondere bei angetriebenen Schienenfahrzeugen eingesetzt. Dabei wird der im Sandvorratsbehälter befindliche Sand über die Sanddosier- und Absperreinrichtung einer meistens durch Druckluft betätigten Fördereinrichtung zugeführt und in der Folge der Sand über entsprechende Leitungen zum Spalt zwischen Fahrzeugrad und Schiene bzw. Untergrund geleitet, wodurch ein Gleit- bzw. Schleuderschutz gebildet wird.

Die im Stand der Technik üblichen Sanddosiereinrichtungen, insbesondere die kolbengesteuerten Sanddosier- und Absperreinrichtungen, weisen eine Reihe von Nachteilen auf, die im Folgenden aufgelistet werden.

Der Anbau der bekannten, insbesondere kolbengesteuerten Sanddosier- und Absperreinrichtungen ist üblicherweise nur außerhalb des Sandvorratsbehälters möglich, was den Platzbedarf für die Sanddosiereinrichtung erheblich erhöht. Durch die benötigte Bauhöhe kann bei begrenztem Einbauraum nur ein vergleichsweise geringes Füllvolumen des Sandvorratsbehälters zur Verfügung gestellt werden. Daraus resultieren kürzere bzw. häufigere Sand-Nachfüllintervalle.

Nachteiligerweise kann bei den bekannten Sanddosier- und Absperreinrichtungen zudem die auszutragende Sandmenge nur mit vergleichsweise geringer Genauigkeit dosiert werden, indem die an die Fördereinrichtung geleitete Sandmenge stark durch die Sandqualität, d.h. insbesondere die Größe der Sandkörner, beeinflusst wird. Insbesondere ist die Einstellung kleiner Sandmengen bei den bekannten kolbengesteuerten Sanddosier- und Absperreinrichtungen nur begrenzt möglich. Der kleinste Dosierkolben-Öffnungsspalt und somit auch die kleinste Sandmengeneinstellung ist abhängig von der verwendeten Sandkörnung, wodurch das größte Sandkorn den kleinsten Dosierkolben-Öffnungsspalt bzw. die kleinste Sandmenge bestimmt.

Bei Betrieb des Sandstreusystems entsteht durch die Injektorfunktion bei pneumatischer Sandförderung durch die Saugwirkung ein Unterdruck, der sich besonders bei kleinen Sandmengeneinstellungen bzw. kleinem Dosierkolben-Öffnungsspalt negativ auswirkt, indem der Sand im Auslassquerschnitt verdichtet wird und dadurch Funktionsstörungen, z.B. Verstopfungen, verursacht werden können. Dieser Effekt kann durch besondere zusätzliche Maßnahmen (z.B. durch die gesteuerte Zuführung eines Luftstroms in den Injektorraum zur Reduzierung des Unterdrucks über einen Bypass) auch nur teilweise kompensiert werden.

Die Sandmengeneinstellung kann nur für jede einzelne Sanddosiereinrichtung individuell, beispielsweise über eine außen liegende Stellschraube am Stellantrieb, vorgenommen werden. Das bedeutet, dass jede einzelne Sanddosiereinrichtung mit entsprechend großem Zeit- und Personalaufwand auf die geforderte Sandmenge einjustiert werden muss.

Weiters besteht bei den bekannten Sanddosiereinrichtungen keine sinnvolle Möglichkeit, die geförderte Sandmenge in Abhängigkeit der Geschwindigkeit des Fahrzeuges stufenlos zu regeln.

Die Aufgabe der vorliegenden Erfindung besteht in der Schaffung einer oben genannten Sanddosier- und Absperreinrichtung, durch welche die Nachteile bekannter kolbengesteuerter Sanddosier- und Absperreinrichtungen mit ausreichender Sicherheit vermieden oder reduziert werden können. Die erfindungsgemäße Sanddosier- und Absperreinrichtung soll möglichst platz- und gewichtsparend, wartungsfrei, verschleißarm und kostenoptimiert konstruierbar sein. Weiters sollen durch die gegenständliche Sanddosier- und Absperreinrichtung alle anderen bekannten Konstruktionen von Sandstreusystemen ohne größeren Aufwand ersetzt werden können.

Gelöst wird die erfindungsgemäße Aufgabe durch eine oben genannte Sanddosier- und Absperreinrichtung gemäß Anspruch 1. Durch die Verwendung einer derartigen Magnet-betätigten Sanddosier- und Absperreinrichtung, bei welcher der Hubmagnet innerhalb des Sandvorratsbehälters im Bereich der Auslauföffnung vorgesehen ist, eröffnen sich neue konstruktive und funktionelle Möglichkeiten. Die Auslauföffnung des Sandvorratsbehälters wird durch Bewegung der den Anker des Hubmagneten darstellenden Hubstange geöffnet und geschlossen. Die an die Fördereinrichtung abgegebene Sandmenge ist dabei unabhängig von der Sandkorngröße bzw. der Sandqualität, indem der Hubkolben mit jedem Hub eine gleichbleibende Sandmenge aus dem Sandvorratsbehälter in die Fördereinrichtung drückt bzw. austrägt; dies im Gegensatz zu den bekannten Sanddosier- bzw. Absperreinrichtungen, bei welchen der Sand aufgrund seines Eigengewichts durch eine freigegebene Auslauföffnung strömt. Indem der Hubmagnet innerhalb des Sandvorratsbehälters im Bereich der Auslauföffnung angeordnet ist, kann eine extrem kleine Bauweise realisiert werden, durch die nur unwesentliches Sandfüllvolumen im Sandvorratsbehälter verloren geht. Weiters können durch dieses Einbaukonzept höhere Bauformen für die Sandvorratsbehälter eingesetzt werden. Zudem wird durch die Vibrationen des Hubmagneten die Förderung des Sandes begünstigt. Der Hubmagnet ist mit einer Steuereinrichtung verbunden. Durch diese Steuereinrichtung kann der Zeitpunkt und die Dauer der Betätigung des Hubmagneten eingestellt werden. Die Steuereinrichtung ist zur Frequenzsteuerung des Hubmagneten ausgebildet. Die Steuereinrichtung bestimmt somit die Frequenz, mit der der Hubmagnet aktiviert und in der Folge die Hubstange des Hubmagneten bewegt wird. Mit der Frequenz wird also die Anzahl der Hübe, d.h. Hin- und Herbewegungen der Hubstange pro Zeiteinheit definiert. Die Dauer der Aktivierung des Hubmagneten und die Dauer der Deaktivierung des Hubmagneten während eines Hubes kann gleich oder auch unterschiedlich gewählt werden. Durch eine derartige frequenzgesteuerte Sanddosier- und Absperreinrichtung können die funktionellen und qualitativen Eigenschaften des Sandstreusystems verbessert werden. Über die definiert gesteuerte Hubfrequenz des Hubmagneten kann eine definierte Sandmenge über die Auslauföffnung des Sandvorratsbehälters an die Fördereinrichtung weitergegeben werden. Die Sandmenge kann demnach unkompliziert und genau über die Hubfrequenz des Hubmagneten gesteuert werden, was eine erhebliche Verbesserung gegenüber bekannten Sanddosier- bzw. Absperreinrichtungen darstellt, bei welchen die ausgetragene Sandmenge vornehmlich über den Öffnungsquerschnitt der Auslauföffnung eingestellt wird. Die Hubfrequenz ist umgekehrt proportional zum Sandmengenaustrag, d.h. eine niedrige Hubfrequenz ergibt eine große Sandmenge und eine hohe Hubfrequenz eine kleine Sandmenge. Durch die oben genannte Positionierung des Hubmagneten im Inneren des Sandvorratsbehälters und diese Arbeitsweise mit einer bestimmten Hubfrequenz können Verbesserungen bei der Förderung des Sandes gegenüber herkömmlichen Einrichtungen erzielt werden. Durch die Fahrdynamik der Fahrzeuge, insbesondere Schienenfahrzeuge, resultieren nämlich häufig hochfrequente Schwingungen bzw. Stöße, die zu erheblichen Sandverdichtungen im Sandvorratsbehälter führen können und in Abhängigkeit von typischerweise relativ kleinen Sandauslaufquerschnitten in der Sanddosiereinrichtung besonders bei kleinen Sandmengeneinstellungen zu undefinierten Sandausträgen führen. Ähnliche Sandaustragungsprobleme können auch durch die Druckluft der Fördereinrichtung dadurch entstehen, dass es sowohl bei im Überdruck als auch im Unterdruck betriebenen Sandstreusystemen ebenfalls in Abhängigkeit von relativ typisch kleinen Sandauslaufquerschnitten in der Sanddosiereinrichtung durch Sandverdichtungen zu undefinierten Sandausträgen kommt. Derartige negative Erscheinungsformen können auf einfache Art und Weise durch den besonderen Effekt, der sich aus der Positionierung des Hubmagneten im Inneren des Sandvorratsbehälters, also im Sand selbst, bzw. durch die Schwingungsenergie, die vom Hubmagneten durch die frequentierende Arbeitsweise ausgeht, gelöst werden, da dadurch der den Magneten umschließende Sand aufgelockert und dadurch der Sandfluss unterstützt wird. Die Steuereinrichtung ist mit einer Einrichtung zur Erfassung der Geschwindigkeit des Fahrzeuges verbunden, so dass eine Geschwindigkeits-abhängige Hubfrequenz-Regelung möglich ist. Dadurch wird eine stufenlose Regelung der Menge des ausgetragenen Sandes in Abhängigkeit der Geschwindigkeit des Fahrzeuges ermöglicht.

Zum Schutz des Hubmagneten vor Beschädigung durch Staub im sanddurchlaufenden Bereich des Sandvorratsbehälters kann der Hubmagnet zumindest teilweise von einem Staubschutz aus geeignetem Material und in geeigneter Form umgeben sein.

Zum sicheren Verschluss der Auslauföffnung des Sandvorratsbehälters kann an der Hubstange ein Dichtelement, vorzugsweise aus elastisch verformbarem Kunststoff, angeordnet sein. Dieses Dichtelement wird gegen die Auslauföffnung im Sandvorratsbehälter gepresst, um den Sandfluss zu unterbrechen. Um eine definierte Sandmenge über die Auslauföffnung freizugeben, wird das Dichtelement über die Hubstange des Hubmagneten entsprechend verschoben.

Vorzugsweise ist die Hubstange mit einer Rückstellfeder verbunden. Diese Rückstellfeder stellt sicher, dass im stromlosen Zustand des Hubmagneten die Auslauföffnung des Sandvorratsbehälters geschlossen wird. Die Rückstellfeder ist vorzugsweise im Gehäuse des Hubmagneten angeordnet und als Druckfeder konzipiert. Der Hubmagnet arbeitet vorzugsweise "drückend", indem bei Stromfluss die Hubstange bewegt wird und im stromlosen Zustand die Hubstange über die Rückstellfeder in die geschlossene Endlage des Verschlusselements gebracht wird.

Gemäß einem weiteren Merkmal der Erfindung sind an der Hubstange Stifte oder dgl. zur Auflockerung des Sandes vorgesehen. Durch derartige Stifte oder dgl. kann der Sand im Sandvorratsbehälter im Bereich der Auslauföffnung aufgelockert werden, wodurch negative Einflüsse sicher vermieden werden können. Beispielsweise können an der Hubstange unterhalb des Staubschutzes zwei um 90° versetzt übereinander angeordnete Stifte platziert werden, welche im besonders kritischen sanddurchführenden Bereich den Sandfluss unterstützen.

Vorzugsweise ist in der Auslauföffnung des Sandvorratsbehälters ein Dosiergehäuse integriert und mit dem Sandvorratsbehälter entsprechend verbunden.

Das Dosiergehäuse weist mehrere, vorzugsweise vier um 90° versetzt angeordnete Sandzulauföffnungen auf, über die der Sand vom Sandvorratsbehälter in die darunter angeordnete Fördereinrichtung transportiert wird. Die Sandzulauföffnungen im Dosiergehäuse sind so positioniert, dass eine vollständige Entleerung des Sandvorratsbehälters erreicht werden kann. Die sanddurchleitenden Öffnungen weisen vorzugsweise konstanten Querschnitt auf und sind auf einen maximalen Sandmengendurchsatz ausgelegt.

Zwischen dem Sandvorratsbehälter und dem Dosiergehäuse ist vorzugsweise eine Dichtung angeordnet. Auch diese Dichtung besteht vorzugsweise aus elastisch verformbarem Kunststoff.

An das Dosiergehäuse schließt in Richtung des geförderten Sandes gesehen ein Sandaufgabe-Injektor der Fördereinrichtung an. In diesem Injektor entsteht durch die Injektor-Wirkung ein Unterdruck, der die Beförderung des Sandes bewirkt. An diesen unterhalb des Dosiergehäuses befindlichen Sandaufgabe-Injektor der vorzugsweise pneumatischen Fördereinrichtung schließt eine Leitung bzw. ein Schlauch an, welcher den Sand zum Spalt zwischen Fahrzeugrad und Schiene bzw. Untergrund befördert.

Die Steuereinrichtung ist vorzugsweise mit der Fördereinrichtung verbunden, so dass der Transport des Sandes nach der Sanddosiereinrichtung in Abhängigkeit der Menge an zudosiertem Sand geregelt werden kann. Beispielsweise kann die Steuereinrichtung mit einem Magnetventil in der Druckluftleitung einer pneumatisch betätigten Fördereinrichtung verbunden sein.

Die vorliegende Erfindung wird anhand der beigefügten Zeichnungen näher erläutert. Darin zeigen:
Fig. 1 eine Ausführungsform der gegenständlichen Sanddosier- und Absperreinrichtung im Querschnitt; und
Fig. 2 eine Prinzipskizze zur Veranschaulichung der Steuerung der erfindungsgemäßen Sanddosier- und Absperreinrichtung.

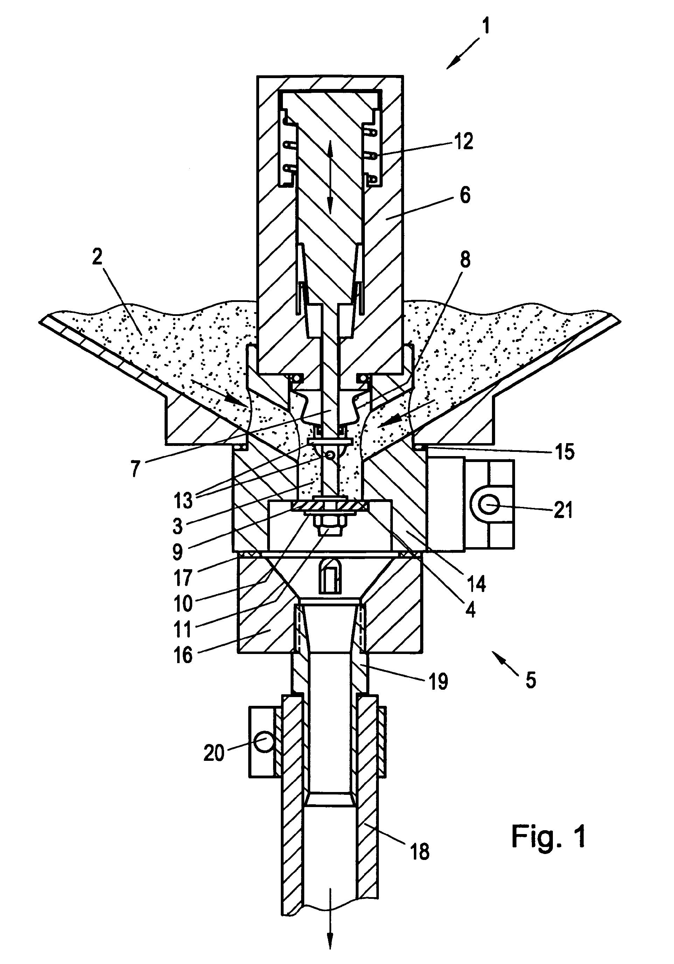

Die in Fig. 1 dargestellte Sanddosier- und Absperreinrichtung 1 besteht aus einem Hubmagnet 6, dessen Hubstange 7 als Verschlusselement 3 die Auslauföffnung 4 des Sandvorratsbehälters 2 abschließt. An der Hubstange 7 ist ein Dichtelement 9, vorzugsweise aus einem Elastomer, angeordnet. Dieses Dichtelement 9 kann über eine entsprechende Stützscheibe 10 und eine Befestigungsmutter 11 an der Stange 7 befestigt sein. Im unteren Bereich des Sandvorratsbehälters 2 ist ein Dosiergehäuse 14 angeordnet, welches mehrere Sandzulauföffnungen, vorzugsweise vier um jeweils 90° umlaufend versetzte Sandzulauföffungen enthält, über welche der Sand des Sandvorratsbehälters 2 entlang der gezeichneten Pfeile zur Auslauföffnung 4 transportiert wird. Diese Sandauslauföffnungen ermöglichen einen gleichmäßigen, sicheren und vollständigen Sandauslauf aus dem Sandvorratsbehälter 2 und verhindern Sandablagerungen. Das Dosiergehäuse 14 liegt mit Ausnahme des Anbauflansches zum Sandvorratsbehälter 2 innerhalb desselben. Durch dieses Baukonzept werden erhebliche konstruktive Vorteile bei der räumlichen fahrzeugseitigen Einbaugestaltung geboten.

Zum Schutz des Hubmagneten 6 vor Staub kann ein geeigneter Staubschutz 8 angeordnet sein. Zwischen dem Dosiergehäuse 14 und dem Sandvorratsbehälter 2 kann weiters eine Dichtung 15 vorgesehen sein.

Die Hubstange 7 des Hubmagneten 6 ist mit einer Rückstellfeder 12 versehen, so dass die Hubstange 7 im stromlosen Zustand des Hubmagneten 6 automatisch in die Verschlussstellung, in der die Auslauföffnung 4 des Sandvorratsbehälters 2 verschlossen ist, gebracht wird. Somit wird im stromlosen Zustand des Hubmagneten 6 ein ungewollter Sandauslauf durch die Rückstellfeder 12 vermieden.

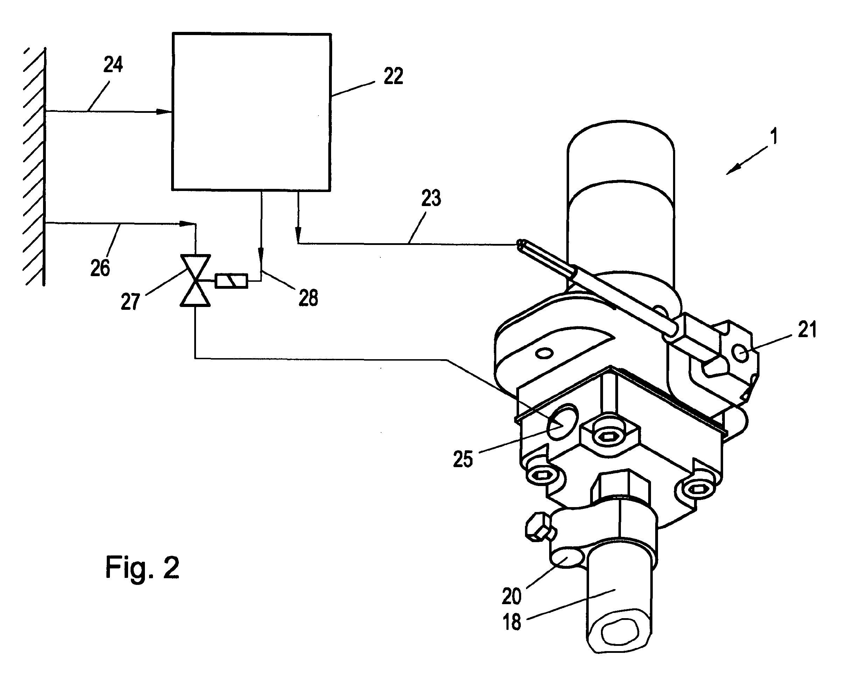

An das Dosiergehäuse 14 schließt nach unten, d.h. in Richtung des geförderten Sandes, ein Injektorgehäuse 16 der vorzugsweise pneumatischen Fördereinrichtung 5 an. Zwischen dem Dosiergehäuse 14 und dem Injektorgehäuse 16 kann wiederum eine Dichtung 17 vorgesehen sein. Am Injektorgehäuse 16 wird ein Sandleitschlauch 18 über einen entsprechenden Schlauchanschluss 19 und eine Befestigungsschelle 20 montiert. Über den Sandleitschlauch 18 wird der Sand vom Injektorgehäuse 16 zum Spalt zwischen Fahrzeugrad und Schiene bzw. Untergrund geleitet (nicht dargestellt). Die Förderung des Sandes erfolgt vorzugsweise mittels Druckluft, welche über einen entsprechenden Druckluftanschluss 25 eingeleitet wird (siehe Fig. 2). Der Anschlussstecker 21 zur Versorgung des Hubmagneten 6 mit elektrischer Energie ist außerhalb des Dosiergehäuses 14 angeordnet.

Fig. 2 zeigt die Steuerung einer solchen erfindungsgemäßen Sanddosier- und Absperreinrichtung 1 in schematischer Darstellung. Demgemäß ist die Sanddosier- und Absperreinrichtung 1 mit einer Steuereinrichtung 22 verbunden. Dies erfolgt über eine entsprechende elektrische Leitung 23, welche mit dem Anschlussstecker 21 des Hubmagneten 6 verbunden ist. Die Steuereinrichtung 22 steuert somit die Betätigung des Hubmagneten 6. Die Steuereinrichtung 22 erhält die Steuersignale aus dem Fahrzeug über eine entsprechende Steuerleitung 24. Die Steuereinrichtung 22 ist zur frequenzgesteuerten Betätigung des Hubmagneten 6 ausgebildet. Die Steuereinrichtung 22 steuert dabei die Hubfrequenz des Hubmagneten 6 und somit die Menge des ausgetragenen Sandes des Streuvorganges. Durch Reduktion der Hubfrequenz des Hubmagneten 6 wird eine Erhöhung der Sandmenge erzielt. Vorteilhafterweise ist die Steuereinrichtung 22 auch mit der Fördereinrichtung 5 verbunden. Im Falle der pneumatischen Fördereinrichtung 5 kann dies dadurch geschehen, dass ein in der Druckluftleitung 26 angeordnetes Magnetventil 27 über eine Steuerleitung 28 mit der Steuereinrichtung verbunden ist. Somit kann durch die Steuereinrichtung 22 Einfluss auf die Druckluft zur Förderung des Sandes nach der Sanddosier- und Absperreinrichtung 1, welcher in den Druckluftanschluss 25 gelangt, genommen werden. Durch diese Verbindung der Steuereinrichtung 22 mit der pneumatischen Fördereinrichtung 5 kann auch ein anschließendes Freiblasen der sandfördernden Leitungen nach Beendigung der Sandstreufunktion über die Steuerleitung 28 veranlasst werden.

Vorzugsweise ist die Steuereinrichtung 22 mit einer Einrichtung zur Erfassung der Geschwindigkeit des Fahrzeuges verbunden, so dass ein proportional zur Fahrzeuggeschwindigkeit stufenlos geregelter Sandmengenaustrag ermöglicht wird. Beispielsweise kann ein zur Fahrzeuggeschwindigkeit proportionales Spannungssignal von z.B. 0-10V an die Steuereinrichtung 22 geführt werden (nicht dargestellt).

Die erfindungsgemäße Hubfrequenz-gesteuerte Magnet-betätigte Sanddosier- und Absperreinrichtung 1 ist als Basiskomponente eines vorzugsweise elektropneumatisch betriebenen Sandstreusystems und bevorzugt für den Einsatz in angetriebenen Schienenfahrzeugen konzipiert. Die Sanddosier- und Absperreinrichtung 1 ermöglicht es, die Sandstreufunktion bei Bedarf auf einfache und sichere Art und Weise definiert zuverlässig zu steuern. Die Sanddosier- und Absperreinrichtung 1 der gegenständlichen Art zeichnet sich durch konstruktive Einfachheit und besondere Funktionseigenschaften im Vergleich zu herkömmlichen Sanddosier- und Absperreinrichtungen aus.

Wesentlich dabei ist die Positionierung der Sanddosier- und Absperreinrichtung 1 im Sandstreusystem, welche unmittelbar im Bereich der Auslauföffnung 4 des Sandvorratsbehälters 2 angeordnet ist. Durch diese Einbauposition der Sanddosier- und Absperreinrichtung 1 bzw. des Hubmagneten 6, in Verknüpfung mit dem Funktionsprinzip und der konstruktiven räumlichen Ausbildung des sanddurchleitenden Bereichs des Dosiergehäuses 14 im Inneren des Sandvorratsbehälters 2, und die Steuereinrichtung 22, die eine frequenzgesteuerte Arbeitsweise des Hubmagneten 6 ermöglicht, werden wesentliche Vorteile gegenüber bekannten Einrichtungen erzielt. Der Hubmagnet 6 hat einen konstanten nicht einstellbaren Arbeitshub und befindet sich im stromlosen Zustand in einer Position, welche die Auslauföffnung 4 des Sandvorratsbehälters 2 verschließt, und im strombehafteten Zustand in einer Stellung, bei der die Auslauföffnung 4 freigegeben wird. Durch eine Frequenzsteuerung des Hubmagneten 6 kann die über den Auslauf 4 austretende Sandmenge gesteuert werden.

Ein Sandstreuvorgang erfolgt üblicherweise durch Handbeschaltung des Führers eines Fahrzeuges oder bei modernen Fahrzeugen automatisiert durch den Gleit- bzw. Schleuderschutz des Fahrzeuges. Dabei wird durch das fahrzeugseitige EIN-Signal die Steuereinrichtung 22 aktiviert und über zwei getrennte Steuersignale gleichzeitig der Hubmagnet 6 und das Magnetventil 27 der Druckluftleitung 26 aktiviert. Durch die abwechselnde Betätigung des Hubmagneten 6 mit der gewünschten Hubfrequenz wird der Sandfluss freigegeben und bei gleichzeitiger Aktivierung der Fördereinrichtung der Sand mittels Druckluft über den Druckluftanschluss 25 über den Sandleitschlauch 18 zum Spalt zwischen Fahrzeugrad und Schiene geleitet.

Nach Beendigung des Sandstreuvorgangs durch Stromlosschaltung des Hubmagneten wird die Hubstange 7 durch die Rückstellfeder 12 in die geschlossene Position gebracht, wodurch die Auslauföffnung 4 des Sandvorratsbehälters 2 durch das Dichtelement 9 verschlossen wird. Das Magnetventil 27 in der Druckluftleitung 26 kann abfallverzögert einige Sekunden, beispielsweise maximal fünf Sekunden, nachgesteuert werden, wodurch der sandfördernde Sandleitschlauch sand- und staubfrei geblasen wird. Dadurch können Leitungsverstopfungen durch Sandablagerungen in Verbindung mit Feuchtigkeit vermieden werden.

Es besteht die Möglichkeit, je nach Aufgabenstellung durch das auszurüstende Fahrzeugkonzept unterschiedliche Arbeitsweisen des Sandstreusystems bzw. der erfindungsgemäßen Sanddosier- und Absperreinrichtung 1 zu bestimmen.

Variante 1: Für das Fahrzeug ist nur eine einstufige Sandstreufunktion mit nur einer fest eingestellten konstanten Sandaustragungsmenge definiert - daraus resultiert auch nur ein EIN/AUS-Signal aus dem Fahrzeug und aus der Steuereinrichtung 22 auch nur ein Frequenzsignal für den Hubmagneten 6.

Variante 2: Für das Fahrzeug ist ein geschwindigkeitsabhängig gesteuerter stufenloser Sandmengenaustrag definiert - daraus resultiert, dass aus dem Fahrzeug ein der Geschwindigkeit zugeordnetes Steuersignal - z.B. 0-10V - an die Steuereinrichtung 22 geleitet wird und diese das Fahrzeugsignal als ein zur Geschwindigkeit proportionales Frequenzsignal an den Hubmagneten 6 weiterleitet und den stufenlosen Sandmengenaustrag steuert.

Einen weiteren Systemvorteil kann die Steuerung auch noch bieten. In Schienenfahrzeugen sind typisch je Achse zwei Sandstreusysteme (pro Rad 1 System) verbaut und in sehr vielen Fällen sind auch über die Fahrzeuglänge mehrere Achsen mit Sandstreusystemen ausgerüstet; dann besteht die Möglichkeit, sämtliche im Fahrzeug verbaute Sandstreusysteme fahrtrichtungsabhängig über nur eine einzige Steuerung zu steuern.

Die erfindungsgemäße Sanddosier- und Absperreinrichtung 1 ist Hauptkomponente eines Sandstreusystems und entscheidend für den Systemaufbau, die Funktionalität und Zuverlässigkeit (Störanfälligkeit) eines Sandstreusystems.

Die beschriebene Sanddosier- und Absperreinrichtung 1 erfüllt uneingeschränkt die hohen Ansprüche eines Bahn-tauglichen Systems und zeichnet sich durch besondere neuartige Funktionsmerkmale, durch hohe Störunanfälligkeit und Zuverlässigkeit aus.

## Patentansprüche

1. Sanddosier- und Absperreinrichtung (1) für Sandstreusysteme für Fahrzeuge, insbesondere angetriebene Schienenfahrzeuge, mit einem Sandvorratsbehälter (2) mit einer durch ein Verschlusselement (3) verschließbaren Auslauföffnung (4) zur dosierten Abgabe des Sandes an eine vorzugsweise pneumatisch betätigte Fördereinrichtung (5), wobei das Verschlusselement (3) durch eine Hubstange (7) eines elektrisch betätigbaren Hubmagneten (6) gebildet ist, wobei der Hubmagnet (6) innerhalb des Sandvorratsbehälters (2) im Bereich der Auslauföffnung (4) angeordnet ist und der Hubmagnet (6) mit einer Steuereinrichtung (22) verbunden ist, wobei die Steuereinrichtung (22) zur Frequenzsteuerung des Hubmagneten (6) ausgebildet ist, **dadurch gekennzeichnet, dass** die Steuereinrichtung (22) mit einer Einrichtung zur Erfassung der Geschwindigkeit des Fahrzeuges verbunden ist, so dass eine Geschwindigkeits-abhängige Hubfrequenzregelung möglich ist.

2. Sanddosier- und Absperreinrichtung (1) nach Anspruch 1, **dadurch gekennzeichnet, dass** der Hubmagnet (6) zumindest teilweise von einem Staubschutz (8) umgeben ist.

3. Sanddosier- und Absperreinrichtung (1) nach Anspruch 1 oder 2, **dadurch gekennzeichnet, dass** an der Hubstange (7) ein Dichtelement (9), vorzugsweise aus einem elastisch verformbaren Kunststoff, angeordnet ist.

4. Sanddosier- und Absperreinrichtung (1) nach einem der Ansprüche 1 bis 3, **dadurch gekennzeichnet, dass** die Hubstange (7) mit einer Rückstellfeder (12) verbunden ist.

5. Sanddosier- und Absperreinrichtung (1) nach einem der Ansprüche 1 bis 4, **dadurch gekennzeichnet, dass** an der Hubstange (7) Stifte (13) oder dgl. zur Auflockerung des Sandes vorgesehen sind.

6. Sanddosier- und Absperreinrichtung (1) nach einem der Ansprüche 1 bis 5, **dadurch gekennzeichnet, dass** in der Auslauföffnung (4) ein Dosiergehäuse (14) integriert ist.

7. Sanddosier- und Absperreinrichtung (1) nach Anspruch 6, **dadurch gekennzeichnet, dass** das Dosiergehäuse (14) mehrere, vorzugsweise vier um 90° versetzt angeordnete Sandzulauföffnungen aufweist.

8. Sanddosier- und Absperreinrichtung (1) nach Anspruch 7, **dadurch gekennzeichnet, dass** zwischen dem Sandvorratsbehälter (2) und dem Dosiergehäuse (14) eine Dichtung (15) angeordnet ist.

9. Sanddosier- und Absperreinrichtung (1) nach einem der Ansprüche 6 bis 8, **dadurch gekennzeichnet, dass** an das Dosiergehäuse (14) ein Sandaufgabe-Injektor (16) der Fördereinrichtung (5) anschließt.

10. Sanddosier- und Absperreinrichtung (1) nach einem der Ansprüche 1 bis 9, **dadurch gekennzeichnet, dass** die Steuereinrichtung (22) mit der pneumatisch betätigten Fördereinrichtung (5) verbunden ist.

## Claims

1. A sand dosing and blocking device (1) for sand spreading systems for vehicles, particularly rail vehicles with drive, comprising a sand reservoir (2) with an outlet opening (4) that is adapted to be closed by means of a closing element (3), for the dosed discharge of the sand to a conveyor unit (5) that is preferably activated pneumatically, wherein the closing element (3) is formed by a lifting rod (7) of an electrically operable lifting magnet (6), wherein the lifting magnet (6) is arranged inside the sand reservoir (2) in the region of the outlet opening (4) and the lifting magnet (6) is connected with a control device (22), wherein the control device (22) is designed for frequency control of the lifting magnet (6), **characterized in that** the control device (22) is connected with a device for detecting the velocity of the vehicle, so that a velocity-dependent lifting frequency regulation is possible.

2. The sand dosing and blocking device (1) according to claim 1, **characterized in that** the lifting magnet (6) is at least partially enclosed by a dust protection (8).

3. The sand dosing and blocking device (1) according to claims 1 or 2, **characterized in that** a sealing element (9), preferably of an elastically deformable plastic material, is arranged at the lifting rod (7).

4. The sand dosing and blocking device (1) according to any of claims 1 to 3, **characterized in that** the lifting rod (7) is connected with a return spring (12).

5. The sand dosing and blocking device (1) according to any of claims 1 to 4, **characterized in that** pins (13) or the like for loosening the sand are provided at the lifting rod (7).

6. The sand dosing and blocking device (1) according to any of claims 1 to 5, **characterized in that** a dosing housing (14) is integrated in the outlet opening (4).

7. The sand dosing and blocking device (1) according to claim 6, **characterized in that** the dosing housing (14) comprises a plurality of, preferably four sand inlet openings staggered by 90°.

8. The sand dosing and blocking device (1) according to claim 7, **characterized in that** a sealing (15) is arranged between the sand reservoir (2) and the dosing housing (14).

9. The sand dosing and blocking device (1) according to any of claims 6 to 8, **characterized in that** a sand feeding injector (16) of the conveying device (5) adjoins the dosing housing (14).

10. The sand dosing and blocking device (1) according to any of claims 1 to 9, **characterized in that** the control device (22) is connected with the pneumatically operated conveying device (5).

## Revendications

1. Dispositif doseur de sable et d'arrêt (1) pour des systèmes de sablage pour véhicules, en particulier pour véhicules sur rail commandés, comportant un réservoir de sable (2) doté d'un orifice de décharge (4) fermable via un élément de fermeture (3), pour la fourniture dosée du sable vers un dispositif transporteur (5) à actionnement de préférence pneumatique, dans lequel l'élément de fermeture (3) est formé par une tige de levage (7) d'un aimant de levage (6) actionné électriquement, dans lequel l'aimant de levage (6) est agencé à l'intérieur du réservoir de sable (2) dans la zone de l'orifice de décharge (4), et l'aimant de levage (6) est relié à un dispositif de commande (22), dans lequel le dispositif de commande (22) est configuré pour commander la fréquence de l'aimant de levage (6), **caractérisé en ce que** le dispositif de commande (22) est relié à un dispositif destiné à détecter la vitesse du véhicule, de telle sorte que soit possible une régulation de la fréquence de levage en fonction de la vitesse.

2. Dispositif doseur de sable et d'arrêt (1) selon la revendication 1, **caractérisé en ce que** l'aimant de levage (6) est au moins partiellement entouré d'une protection antipoussières (8).

3. Dispositif doseur de sable et d'arrêt (1) selon la revendication 1 ou 2, **caractérisé en ce qu'**un élément d'étanchéité (9), de préférence en une matière plastique pouvant subir une déformation élastique, est agencé contre la tige de levage (7).

4. Dispositif doseur de sable et d'arrêt (1) selon l'une des revendications 1 à 3, **caractérisé en ce que** la tige de levage (7) est reliée à un ressort de rappel (12).

5. Dispositif doseur de sable et d'arrêt (1) selon l'une des revendications 1 à 4, **caractérisé en ce que** des broches (13) ou analogues, destinées à l'ameublissement du sable, sont prévues contre la tige de levage (7).

6. Dispositif doseur de sable et d'arrêt (1) selon l'une des revendications 1 à 5, **caractérisé en ce qu'**un boîtier de dosage (14) est intégré dans l'orifice de décharge (4).

7. Dispositif doseur de sable et d'arrêt (1) selon la revendication 6, **caractérisé en ce que** le boîtier de dosage (14) présente plusieurs, de préférence quatre, orifices d'amenée du sable agencés avec un décalage de 90°.

8. Dispositif doseur de sable et d'arrêt (1) selon la revendication 7, **caractérisé en ce qu'**un joint (15) est agencé entre le réservoir de sable (2) et le boîtier de dosage (14).

9. Dispositif doseur de sable et d'arrêt (1) selon l'une des revendications 6 à 8, **caractérisé en ce qu'**un injecteur d'alimentation en sable (16) du dispositif d'approvisionnement (5), est raccordé au boîtier de dosage (14).

10. Dispositif doseur de sable et d'arrêt (1) selon l'une des revendications 1 à 9, **caractérisé en ce que** le dispositif de commande (22) est relié à un dispositif d'approvisionnement (5) à actionnement pneumatique.
